# FASCICULE DE BREVET EUROPEEN

(11) **EP 2 174 892 B1**
(45) Date de publication et mention de la délivrance du brevet: **29.02.2012**
(21) Numéro de dépôt: 09172359.3
(22) Date de dépôt: 06.10.2009
(51) Int. Cl.: B65G 1/02, F16P 1/02, E01F 7/04

(54) **Dispositif de retenue d'objets empilés dans des zones de stockage**
Haltevorrichtung für in Speicherzonen gestapelte Gegenstände
Retaining device for objects stacked in storage zones

(30) Priorité: 07.10.2008 FR 0856791
(43) Date de publication de la demande: 14.04.2010
(73) Titulaire: PEUGEOT CITROËN AUTOMOBILES S.A., 78140 Velizy Villacoublay (FR); COUTIER INDUSTRIE, 57970 Basse Ham (FR)
(72) Inventeur: Joyeux, Jean-Pierre, 57130, SAINTE RUFFINE (FR); Coutier, Charles, 57570, CATTENOM (FR)
(74) Mandataire: Thinat, Michel

(56) Documents cités:
- EP-A- 0 877 122
- WO-A-2005/038143
- JP-A- 2000 154 510
- US-A1- 2003 217 526
- US-A1- 2005 000 928

## Description

La présente invention concerne d'une façon générale un dispositif de retenue d'objets empilés dans des zones de stockage.

Plus particulièrement, la présente invention concerne un dispositif de retenue comprenant un filet de protection s'étendant au moins en partie sur un côté de l'ensemble des objets empilés pour permettre une sécurisation de l'environnement de l'ensemble contre la chute possible de certains de ces objets.

Il est connu de munir les zones de stockage d'écrans destinés à retenir les objets susceptibles de chuter lors des diverses manutentions.

En général, ces dispositifs comprennent des filets attachés au sol et à la charpente sans reprise d'effort local, des filets combinés avec des parties grillagées ou des filets doublés de parois grillagées.

Les inconvénients de ce type de dispositifs connus, qui ne présentent pas en général de moyens de reprise d'effort local, sont une protection déficiente des biens et des personnes et une rupture possible des attaches sous une sollicitation locale faible. Quand des moyens de reprise d'effort sont prévus, par exemple sous la forme de câbles tendus le long du dispositif, ces moyens favorisent la concentration des efforts en un point suite au glissement de ces moyens sur les objets à protéger. Enfin et surtout, quand le filet est accroché à des points fixes du bâtiment de stockage, il existe un risque de détérioration de la structure du bâtiment quand un effort important est imposé au filet.

De plus, ces dispositifs sont disparates, n'ont pas fait pas l'objet d'études spécifiques pour harmoniser leur fabrication et sont réalisés au coup par coup à l'initiative des différents prestataires, ce qui augmente notoirement leur prix de revient et ne permet pas d'identifier facilement les causes d'un incident survenant sur ceux-ci afin d'y remédier de façon satisfaisante.

Lors de manoeuvres d'empilage, de déplacement ou de transport sur un ensemble d'objets empilés, le risque de rupture d'équilibre des objets, par exemple des emballages ou des pièces contenues dans l'ensemble est possible. Comme les zones de stockage sont contiguës aux allées de circulation dans les ateliers d'usinage ou de montage ainsi qu'à d'autres endroits où du personnel est susceptible d'évoluer, une telle rupture peut avoir de graves conséquences sur la sécurité du personnel.

Les documents KR-A-2006/0134935 et EP 1 680 552 A1 décrivent un filet de protection avec une rangée de fils métalliques longitudinaux disposés côte à côte, chacun des fils métalliques étant torsadé avec un fil longitudinal adjacent. Un ou plusieurs câbles longitudinaux, pouvant être solidarisés à un élément fixe à leurs extrémités supérieure et inférieure, sont aussi prévus, sur lequel ou lesquels un ou des fils métalliques longitudinaux adjacents sont torsadés. Il peut être aussi prévu des fils métalliques transversaux ou des câbles métalliques transversaux qui eux aussi peuvent être torsadés avec un ou plusieurs fils métalliques longitudinaux. Le grand désavantage d'un tel dispositif est que, lorsqu'une charge trop grande des objets empilés s'exerce sur le ou les câbles longitudinaux, cette charge étant due par exemple à une surcharge de l'ensemble des objets empilés ou à une chute d'objets de cet ensemble, le câble longitudinal peut arracher son point d'ancrage avec l'élément fixe associé et peut détériorer gravement celui-ci. Ceci peut arriver quand l'élément fixe est la charpente du bâtiment de stockage et cette charpente peut être gravement détériorée lors d'une telle surcharge dans l'ensemble des objets stockés.

En effet, lors par exemple d'un impact par un ou des objets tombant de l'ensemble empilé, il y a certes absorption d'une partie de l'énergie créée par la chute de l'objet ou des objets tombants par déformation élastique du filet mais cette déformation n'est pas suffisante pour freiner efficacement la chute de cet objet ou de ces objets.

Un autre dispositif de retenue d'objets empilés selon le préambule de la revendication 1 est connu du document US 2005/000928.

Le but de la présente invention est d'élaborer un dispositif de retenue d'objets empilés destiné, d'une part, à contenir, en cas de chute accidentelle, les objets entreposés dans les zones de stockage industrielles afin de protéger le personnel et le matériel présent aux abords immédiats des dites zones et, d'autre part, d'éviter qu'une trop forte sollicitation du dispositif de retenue n'endommage ses points d'ancrage dans le bâtiment de stockage et par la même ce bâtiment.

A cet effet, l'invention a pour objet un dispositif de retenue d'objets empilés selon la revendication 1.

Selon des caractéristiques additionnelles de la présente invention :
- le filet présente des pièces rigides supérieure et inférieure s'étendant sur la largeur du filet et respectivement solidaires des éléments fixes supérieur et inférieur.
- chaque moyen de mise en tension est relié respectivement à ces pièces rigides supérieure et inférieure par au moins un moyen tendeur,
- les moyens de mise en tension sont sous forme de deux chaînes s'étendant chacune le long d'un côté vertical respectif du pan du filet, des moyens de fixation par attache rapide étant prévus pour relier le filet à chacune de ces chaînes,
- les moyens de mise en tension comprennent des câbles s'étendant verticalement à travers le filet, des moyens de fixation par attache rapide étant prévus pour relier le filet à ces câbles,
- l'organe à rupture contrôlée ou au moins un des organes à rupture contrôlée est sous la forme d'une boucle calibrée cédant lorsque soumise à une force de traction supérieure à une valeur prédéterminée,
- la partie basse du filet est protégée par une protection anti-car disposée devant cette partie,
- le dispositif comporte des moyens de sa fixation à l'élément fixe supérieur comportant une barre principale, s'étendant le long de la partie supérieure du filet et une pluralité de barres de répartition régulièrement espacées et perpendiculaires à ladite barre principale,
- l'élément fixe supérieur étant une charpente de bâtiment, les barres de répartition sont reprises sur des potelets fixés aux noeuds de cette charpente.

L'effet technique d'un tel dispositif de retenue avec au moins un organe à rupture contrôlée sur un ou des moyens de mise en tension du dispositif est de fournir une barrière dynamique de freinage d'un ou d'objets tombant de l'ensemble stocké, un tel organe à rupture contrôlée permettant la dissipation de l'énergie cinétique due à l'impact du ou des objets sur le filet sans risque d'entraîner la rupture des éléments de mise en tension du filet.

L'invention va maintenant être décrite plus en détail mais de façon non limitative en regard des figures annexées, dans lesquelles :
- la figure 1 est une représentation schématique d'une vue de face du dispositif de retenue selon la présente invention,
- la figure 2 est une représentation schématique d'une vue de face en perspective du dispositif de retenue conformément à l'invention,
- la figure 3 est une représentation schématique d'une vue agrandie de la partie entourée référencée B de la figure 1, montrant la partie d'extrémité basse droite du dispositif de retenue conformément à la présente invention,
- la figure 4 est une représentation schématique d'une vue agrandie en perspective d'une partie d'extrémité inférieure de câble de tension présentant trois organes à rupture contrôlée, l'utilisation de plusieurs organe à rupture contrôlée sur un même moyen de tension représentant une forme de réalisation du dispositif de retenue conformément à la présente invention.

Dans ce qui va suivre, les objets stockés peuvent être de toute nature, par exemple des pièces, des outils, avec ou sans emballage.

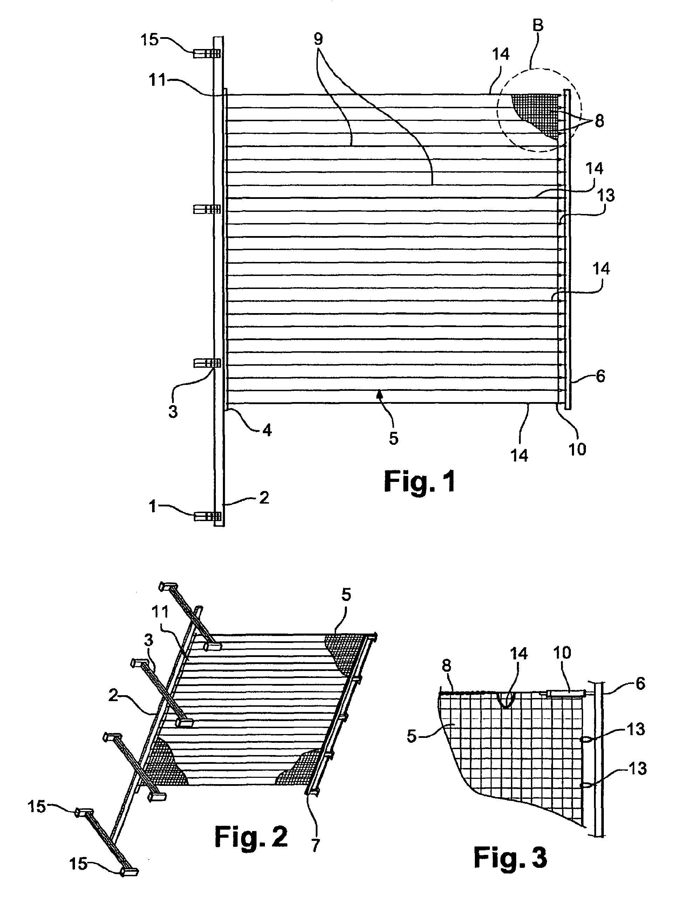

La figure 1 montre un dispositif de retenue pour des objets empilés, non montrés aux figures, ce dispositif définissant au moins un pan derrière lequel se trouve l'ensemble des objets superposés. Ce dispositif comprend au moins un filet 5 s'étendant verticalement et fixé par une cornière supérieure 4 disposée à son bord supérieur à un élément fixe supérieur 2 et par une cornière inférieure disposée à son bord inférieur à un élément fixe inférieur.

Aux figures 1 à 3, pour des raisons d'encombrement, les cornières supérieure 4 et inférieure 6, cette dernière n'étant référencée qu'aux figures 2 et 3, ont été montrées s'étendant verticalement alors qu'elles s'étendent horizontalement au dessus et en dessous du filet 5.

Sur ces figures, la cornière supérieure 4 et la cornière inférieure 6, cette dernière n'étant référencée qu'aux figures 2 et 3, forment respectivement les pièces rigides supérieure et inférieure s'étendant sur la largeur du filet 5.

Quand l'ensemble d'objets stockés est large, le dispositif de retenue peut comprendre plusieurs filets successifs ou se chevauchant légèrement.

Avantageusement, la fixation du filet 5 est effectuée respectivement avec le plancher et la charpente 1 du bâtiment de stockage.

L'élément fixe supérieur 2 est sous la forme d'une structure de fers de répartition avec une première barre principale 2 s'étendant le long du côté supérieur du filet 5 et supportée par une série de barres 3 de répartition, espacées et perpendiculaires à cette barre principale 2, elles-mêmes fixées à la structure du bâtiment 1 par des potelets standard 15. Avantageusement, la cornière supérieure 4 peut être soudée sur la barre principale 2.

L'élément fixe inférieur est le plancher du bâtiment de stockage, plancher sur lequel la cornière 6 est fixée par des moyens de fixation tels que des vis fichées dans des chevilles chimiques.

La répartition des points de fixation sur les fers, en parties haute et basse permet également de garantir une sollicitation uniforme du filet.

Le principe de fixation de la barre principale 2 supérieure sur des barres 3 de répartition perpendiculaires à cette barre principale 2, ces barres 3 de répartition étant elles-mêmes reprises sur des potelets 15 fixés aux noeuds de la charpente 1, permet de protéger la structure du bâtiment d'efforts non prévus dans ses normes de construction, par exemple lors d'un déversement d'objets empilés.

Les cornières supérieure 4 et inférieure 6 sont, avantageusement, sous la forme d'équerres avec deux bras sensiblement d'égale longueur. Un bras est en position sensiblement horizontale en étant appliqué contre l'élément fixe, par exemple le plancher ou la barre principale 2 des fers reliée indirectement à la charpente 1 du bâtiment, l'autre bras étant sensiblement en position verticale et solidarisé avec le filet 5.

Avantageusement, le filet 5 est solidarisé avec les cornières supérieure 4 et inférieure 6 par l'intermédiaire de moyens de fixation rapide, référencés 11 pour les moyens de fixation rapide pour le haut du filet 5 et 13 pour ceux du bas du filet 5. Les moyens de fixation rapide 11 et 13 peuvent être équivalents et sous la forme de manilles ou de crochets à attache rapide ou analogues.

Sur chacun de ses côtés longitudinaux, ces côtés étant sensiblement verticaux, le filet 5 est attaché à une chaîne 8 tendue entre la cornière supérieure 4 et la cornière inférieure 6.

La reprise intermédiaire du filet 5 est assurée par plusieurs câbles 9 disposés à égale distance et tendus entre la cornière supérieure 4 et la cornière inférieure 6. Le filet 5 y est aussi attaché par des moyens de fixation rapide 12.

Ces chaînes 8 et/ou ces câbles 9 forment les moyens de mise en tension du filet et servent aussi de renforts pour celui-ci.

La tension des chaînes 8 et des câbles 9 peut être assurée respectivement par au moins un moyen tendeur, par exemple un tendeur à lanterne 10 disposé entre l'extrémité de ce câble 9 et/ou de cette chaîne 8 et le bras montant de la cornière inférieure 6. En effet, préférentiellement, le tendeur à lanterne 10 se trouve en partie basse du filet 5 en étant solidarisé avec la cornière inférieure 6.

Comme les chaînes 8 et les câbles 9 forment les moyens de mise en tension du filet 5, lorsque celui-ci est soumis à des efforts, celui-ci reporte uniformément ces efforts sur les chaînes 8 et/ou les câbles 9. De cette manière, le filet 5 travaille dans les conditions prescrites par le fabriquant.

Conformément à la présente invention, dans le dispositif de retenue précédemment décrit, au moins un moyen de mise en tension 8 ou 9 est muni d'au moins un organe à rupture contrôlée 14 cédant lorsque soumis à une force de traction supérieure à une valeur prédéterminée.

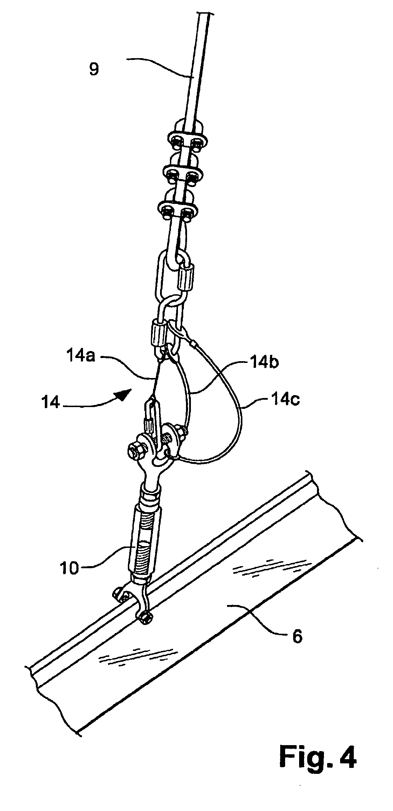

Ce ou ces organes 14 à rupture contrôlée sont, de préférence, disposés en bas du filet 5, par exemple mais pas exclusivement, dans la partie entourée et référencée B et seront décrits plus précisément aux figures 3 et 4.

Lorsque le filet 5 n'est pas utilisé sur la totalité de sa hauteur, il peut être replié vers le haut et ce repliement peut être fixé par un collier plastique au filet tendu.

Le filet 5 peut être construit à partir de cordelettes synthétiques nouées pour former les mailles. Cette configuration permet au filet de retenir des emballages ayant une masse de 1,5 tonne avec des angles tranchants.

Pour ordre d'idée, le dispositif de retenue peut se composer de plusieurs filets d'une largeur approximative de six mètres, chaque côté longitudinal d'un filet 5 étant fixé sur une chaîne 8 tendue verticalement.

Pour illustration et sans que cela soit limitatif, le maillage du filet 5 peut être de 50mm.50mm, pour une taille d'objets stockés habituelle dans le domaine des pièces de véhicule automobile. La taille des mailles est définie pour interdire le passage aux objets stockés et dépend naturellement de la grosseur de ceux-ci.

Le filet 5 de protection est à haute résistance mécanique et peut être pourvu additionnellement d'une ralingue périphérique, et, avantageusement, de ralingues horizontales supplémentaires en haut du filet pour s'adapter aux hauteurs courantes de structures de bâtiment. Il est rappelé qu'une ralingue est un cordage cousu autour de ce filet pour le renforcer.

La figure 2 est une représentation schématique d'une vue de face en perspective du dispositif de retenue conformément à l'invention.

Cette figure 2 reprend les mêmes éléments décrits à la figure 1. Au dessus du filet 5, la série de barres 3 de répartition, espacées et perpendiculaires à la barre supérieure principale 2 en supportant celle-ci, est plus visible à cette figure que sur la figure 1.

Avantageusement, comme montré à cette figure, une protection anti-car série lourde 7 est disposée devant la fixation basse de la cornière 6 du filet 5 avec le plancher. Cette protection 7 protège la cornière 6 et la partie basse du filet 5 afin d'éviter qu'un véhicule, par exemple un chariot élévateur lors d'une mauvaise manoeuvre, ne heurte le filet 5, ce qui peut le fragiliser ou même l'arracher.

La figure 3 est une représentation schématique d'une vue agrandie de face de la partie entourée référencée B de la figure 1, montrant la partie d'extrémité basse droite du dispositif de retenue conformément à la présente invention.

Comme précédemment mentionné, le filet 5 est attaché à la cornière inférieure 6 à intervalles réguliers par des moyens de fixation à attache rapide 13.

La chaîne 8 bordant un côté vertical du filet 5 est attachée à cette cornière inférieure 6 par un moyen tendeur 10 sous forme d'un tendeur à lanterne.

Au moins un des moyens de mise en tension, c'est-à-dire les chaînes 8 et/ou les câbles 9 de la figure 1, est muni d'au moins un organe à rupture contrôlée apte à se rompre lorsque le renfort est soumis à un effort de tension supérieur à une valeur prédéterminée.

La détermination de l'emplacement et le nombre de organe à rupture contrôlée sont adaptés pour garantir l'efficacité du dispositif tout en protégeant la structure du bâtiment.

A la figure 3, la chaîne 8 d'extrémité de filet 5 est pourvue en partie basse d'un organe à rupture contrôlée 14, disposé au dessus du tendeur à lanterne 10 et calibré pour rompre lors d'une sollicitation supérieure à une valeur prédéterminée, par exemple à 500 kgf (environ 490 daN).

Pour l'emplacement de l'organe à rupture contrôlée 14, la partie d'extrémité inférieure d'une chaîne et/ou d'un câble, se trouvant au dessus de l'élément de mise en tension 10 de cette chaîne ou de ce câble relié à la cornière inférieure 6, est préférée. Les organes à rupture contrôlée 14 peuvent aussi se trouver sur plusieurs câbles et/ou chaînes du filet 5, aussi sur tous les câbles et toutes les chaînes de celui-ci.

La figure 4 est une représentation schématique d'une vue agrandie d'une partie d'extrémité inférieure de câble de tension présentant trois organes à rupture contrôlée, l'utilisation de plusieurs organes à rupture contrôlée sur un même moyen de mise en tension représentant une forme de réalisation du dispositif de retenue conformément à la présente invention.

A cette figure, dans ce mode de réalisation du dispositif de retenue selon la présente invention, le câble 9 de tenson présente trois organes à rupture contrôlée sous la forme de boucles 14a, 14b et 14c calibrées pour rompre lors d'une sollicitation supérieure à une valeur prédéterminée, par exemple à 500 kg. Préférentiellement, les trois boucles 14a, 14b et 14c sont de longueurs différentes afin qu'elles puissent se rompre successivement.

L'énergie, issue de la chute d'un objet, est au départ compensée par un allongement du premier organe à rupture contrôlée formant la boucle 14a jusqu'à la rupture de celle-ci. Après la rupture de cette première boucle 14a, la tension s'exerce sur la seconde boucle 14b et de même, quand celle-ci est rompue, sur la troisième 14c. Par exemple, sans que cela soit limitatif, la première boucle 14a peut présenter une longueur deux fois inférieure à la seconde boucle 14b et trois fois inférieure à la troisième boucle 14c. Cela permet un gonflement limité du filet avant rupture afin d'amortir au mieux la chute de l'objet ou des objets tombant.

Ainsi l'énergie, due à la chute d'un objet ou d'objets de l'ensemble stocké, qui est à dissiper pour la protection du filet et de ses moyens de fixation, s'affaiblit progressivement au fur et à mesure de la rupture des boucles 14a, 14b et 14c.

A la figure 4, les organes à rupture contrôlée 14a, 14b et 14c sont disposés entre le câble 9 et son moyen tendeur 10 sous la forme d'un tendeur à lanterne. Il est cependant possible de disposer ces organes à rupture contrôlée 14a, 14b et 14c en parallèle du câble 9, celui-ci formant dans cet intervalle une plus grande boucle que celle du dernier organe à rupture contrôlée 14c. Cela peut constituer une réserve de câble 9 qui entre en jeu lorsque le dernier organe à rupture contrôlée 14c avec la plus grande boucle se rompt et représenter une dernière sécurité de la mise en tension de ce câble 9.

Dans ce qui a été décrit précédemment, les boucles formant chacune un organe à rupture contrôlée 14a, 14b et 14c et servant à dissiper l'énergie sont disposées en parallèle.

Il est cependant possible de mettre de telles boucles formant chacune un organe à rupture contrôlée 14a, 14b, 14c en parallèle avec le câble ou la chaîne, celui-ci ou celle-ci n'étant pas tendu entre les boucles et donc non sollicité en traction.

Il est aussi possible de prévoir des boucles formant des organes à rupture contrôlée 14a, 14b et 14c disposées en série ou une combinaison de boucles en série et en parallèle. Dans le cas de boucles formant des organes à rupture contrôlée 14a, 14b et 14c disposées en série, le câble ou la chaîne présente aussi de préférence une boucle de câble pour chaque organe à rupture contrôlée 14a, 14b et 14c.

Le nombre d'organes à rupture contrôlée 14a, 14b et 14c peut varier selon les utilisations et n'est en aucun cas limité à trois.

Les avantages de la présente invention sont nombreux. On pourra citer entre autres :
- la garantie d'une protection efficace des personnes ou des biens se trouvant à proximité du dispositif et de l'autre côté des objets empilés,
- l'introduction d'un moyen de protection de la structure du bâtiment en cas de chute des objets empilés, ce moyen de protection étant sous la forme d'un organe à rupture contrôlée,
- l'insertion de cet organe à rupture contrôlée en partie basse du câble ou de la chaîne protège efficacement la charpente du bâtiment tout en empêchant les objets tombant de l'ensemble de franchir la limite définie,
- la sollicitation uniforme du filet afin d'utiliser de manière optimale ses caractéristiques et les prescriptions du fabricant.

Ainsi, l'intérêt de la présente invention est double.

En ce qui concerne, tout d'abord, l'aspect sécurité, le dispositif de retenue permet une protection efficace des biens implantés et des personnes circulant autour des zones de stockage. De plus, la mise en oeuvre d'organes à rupture contrôlée fonctionnant successivement permet de garantir l'intégrité de la structure du bâtiment. Enfin, la création d'un standard de dispositif de retenue garantit une installation conforme à la fonction désirée.

En ce qui concerne ensuite l'aspect économique, une économie substantielle est réalisée étant donné l'utilisation d'objets courants et de filets standard, ainsi que l'adaptation et la réutilisation possible des éléments constitutifs de ce dispositif. Enfin, la définition d'un dispositif de retenue standard permet de créer une base de comparaison fiable entre les divers dispositifs à l'étude.

L'invention n'est nullement limitée aux modes de réalisation décrits et illustrés mais est limitée par l'étendue des revendications attenantes.

## Revendications

1. Dispositif de retenue d'objets empilés définissant au moins un pan derrière lequel se trouve l'ensemble des objets, ce dispositif comprenant au moins un filet (5) s'étendant verticalement et fixé à son extrémité supérieure et son extrémité inférieure à un élément fixe (2) respectif, des moyens de mise en tension (8,9) du filet (5) s'étendant verticalement entre les deux éléments fixes inférieur et supérieur (2), le filet (5) étant rendu solidaire de ces moyens de mise en tension (8, 9) par des moyens de fixation (11, 13), au moins un moyen de mise en tension (8 ou 9) étant muni d'au moins un organe à rupture contrôlée (14, 14a, 14b, 14c) cédant lorsque soumis à une force de traction supérieure à une valeur prédéterminée, **caractérisé en ce que** l'organe à rupture contrôlée (14, 14a, 14b, 14c) comporte au moins deux liens calibrés en rupture à la traction, en parallèle l'un de l'autre et de longueur différente.

2. Dispositif selon la revendication 1, **caractérisé en ce qu'**il est conçu de manière à permettre la dissipation de l'énergie due à un impact sur le filet.

3. Dispositif selon l'une des revendications précédentes, **caractérisé en ce que** le filet (5) présente des pièces rigides supérieure (4) et inférieure (6) s'étendant sur la largeur du filet (5) et respectivement solidaires des éléments fixes supérieur (2) et inférieur.

4. Dispositif selon l'une des revendications précédentes, **caractérisé en ce que** chaque moyen de mise en tension (8 ou 9) est relié respectivement à ces pièces rigides supérieure (2) et inférieure (6) par au moins un moyen tendeur (10).

5. Dispositif selon l'une des revendications précédentes, **caractérisé en ce que** les moyens de mise en tension (8, 9) sont sous forme de deux chaînes (8) s'étendant chacune le long d'un côté vertical respectif du pan du filet (5), des moyens de fixation (11, 13) par attache rapide étant prévus pour relier le filet (5) à chacune de ces chaînes (8).

6. Dispositif selon l'une des revendications précédentes, **caractérisé en ce que** les moyens de mise en tension (8, 9) comprennent des câbles (9) s'étendant verticalement à travers le filet (5), des moyens de fixation (11, 13) par attache rapide étant prévus pour relier le filet (5) à ces câbles (9).

7. Dispositif selon l'une des revendications précédentes, **caractérisé en ce que** l'organe à rupture contrôlée (14) ou au moins un des organes à rupture contrôlées (14a, 14b, 14c) est sous la forme d'une boucle calibrée cédant lorsque soumise à une force de traction supérieure à une valeur prédéterminée.

8. Dispositif selon l'une des revendications précédentes, **caractérisé en ce qu'**il comporte des moyens de sa fixation à l'élément fixe supérieur (2) comportant une barre principale (2), s'étendant le long de la partie supérieure du filet (5) et une pluralité de barres de répartition (3) régulièrement espacées et perpendiculaires à ladite barre principale (2).

9. Dispositif selon la revendication 8, **caractérisé en ce que**, l'élément fixe supérieur (2) étant une charpente de bâtiment, les barres de répartition (3) sont reprises sur des potelets (15) fixés aux noeuds de cette charpente (1).

## Claims

1. A retaining device for stacked objects defining at least one face behind which all of the objects are located, said device comprising at least one net (5) extending vertically and fastened at its upper end and lower ends to a respective stationary element (2), means (8, 9) for placing the net (5) under tension extending vertically between the two lower and upper stationary elements (2), the net (5) being secured to said tensioning means (8, 9) by fastening means (11, 13), at least one tensioning means (8 or 9) being provided with at least one controlled break member (14, 14a, 14b, 14c) giving way when subjected to a traction force above a predetermined value, **characterized in that** the controlled break member (14, 14a, 14b, 14c) comprises at least two links calibrated to break upon traction, parallel to one another and of different length.

2. The device according to claim 1, **characterized in that** it is assigned so as to allow the energy due to an impact on the net to dissipate.

3. The device according to one of the preceding claims, **characterized in that** the net (5) has upper (4) and lower (6) rigid pieces extending over the width of the net (5) respectively secured to upper (2) and lower stationary elements.

4. The device according to one of the preceding claims, **characterized in that** each tensioning means (8 or 9) is respectively connected to said upper (2) and lower (6) rigid pieces by at least one stretching means (10).

5. The device according to any one of the preceding claims, **characterized in that** the tensioning means (8, 9) are in the form of two chains (8) each extending along a respective vertical side of the face of the net (5), quick connection fastening means (11, 13) being provided to connect the net (5) to each of said chains (8).

6. The device according to one of the preceding claims, **characterized in that** the tensioning means (8, 9) comprise cables (9) extending vertically through the net (5), quick connection fastening means (11, 13) being provided to connect the net (5) to said cables (9).

7. The device according to one of the preceding claims, **characterized in that** the controlled break member (14) or at least one of the controlled break members (14a, 14b, 14c) is in the form of a calibrated loop giving way when subjected to a traction force above a predetermined value.

8. The device according to one of the preceding claims, **characterized in that** it comprises means for fastening it to the upper stationary element (2) comprising a primary bar (2), extending along the upper portion of the net (5) and a plurality of distribution bars (3) regularly spaced apart and perpendicular to said primary bar (2).

9. The device according to claim 8, **characterized in that**, the upper stationary element (2) being a building frame, the distribution bars (3) are supported on studs (15) secured to the panel joints of said frame (1).

## Patentansprüche

1. Haltevorrichtung gestapelter Gegenstände, die mindestens eine Fläche definiert, hinter der sich die Gruppe Gegenstände befindet, wobei diese Vorrichtung mindestens ein Netz (5) umfasst, das sich vertikal erstreckt und an seinem oberen Ende und seinem unteren Ende an einem jeweiligen festen Element (2) befestigt ist, wobei sich Spannmittel (8, 9) des Netzes (5) vertikal zwischen den zwei festen Elementen (2), dem unteren und oberen, erstrecken, wobei das Netz (5) mit diesen Spannmitteln (8, 9) durch Befestigungsmittel (11, 13) verbunden ist, wobei mindestens ein Spannmittel (8 oder 9) mit mindestens einem Kontrollbruchorgan (14, 14a, 14b, 14c) ausgestattet ist, das nachgibt, wenn es einer Zugkraft ausgesetzt wird, die größer als ein vorbestimmter Wert ist, **dadurch gekennzeichnet, dass** das Kontrollbruchorgan (14, 14a, 14b, 14c) mindestens zwei parallele, unterschiedlich lange zugbruchkalibrierte Verbindungen aufweist.

2. Vorrichtung nach Anspruch 1, **dadurch gekennzeichnet, dass** sie derart konstruiert ist, um die Dissipation der Energie aufgrund eines Aufschlags auf das Netz zu erlauben.

3. Vorrichtung nach einem der vorangehenden Ansprüche, **dadurch gekennzeichnet, dass** das Netz (5) starre obere (4) und untere (6) Teile aufweist, die sich über die Breite des Netzes (5) erstrecken und jeweils mit festen oberen (2) und unteren Elementen verbunden sind.

4. Vorrichtung nach einem der vorangehenden Ansprüche, **dadurch gekennzeichnet, dass** jedes Spannmittel (8 oder 9) jeweils mit diesen starren oberen (2) und unteren (6) Teilen durch mindestens ein Spannmittel (10) verbunden ist.

5. Vorrichtung nach einem der vorangehenden Ansprüche, **dadurch gekennzeichnet, dass** die Spannmittel (8, 9) die Form von zwei Ketten (8) haben, die sich jeweils entlang einer jeweiligen vertikalen Seite der Fläche des Netzes (5) erstrecken, wobei Schnellbefestigungsmittel (11, 13) vorgesehen sind, um das Netz (5) mit jeder dieser Ketten (8) zu verbinden.

6. Vorrichtung nach einem der vorangehenden Ansprüche, **dadurch gekennzeichnet, dass** die Spannmittel (8, 9) Kabel (9) umfassen, die sich vertikal durch das Netz (5) erstrecken, wobei Schnellbefestigungsmittel (11, 13) vorgesehen sind, um das Netz (5) mit diesen Kabeln (9) zu verbinden.

7. Vorrichtung nach einem der vorangehenden Ansprüche, **dadurch gekennzeichnet, dass** das Kontrollbruchorgan (14) oder mindestens eines der Kontrollbruchorgane (14a, 14b, 14c) die Form einer kalibrierten Schleife hat, die nachgibt, wenn sie einer Zugkraft ausgesetzt wird, die größer als ein vorbestimmter Wert ist.

8. Vorrichtung nach einem der vorangehenden Ansprüche, **dadurch gekennzeichnet, dass** sie Mittel für ihre Befestigung am oberen festen Element (2) aufweist, das eine Hauptstange (2), die sich entlang des oberen Abschnitts des Netzes (5) erstreckt, und eine Vielzahl gleichmäßig beabstandeter Verteilerstangen (3) senkrecht zur Hauptstange (2) aufweist.

9. Vorrichtung nach Anspruch 8, **dadurch gekennzeichnet, dass** das obere feste Element (2) ein Gebäudegerüst ist, wobei die Verteilerstangen (3) an Streben (15) befestigt sind, die an den Kreuzungspunkten dieses Gerüsts (1) befestigt sind.
